# FASCICULE DE BREVET EUROPEEN

(11) **EP 4 330 534 B1**
(45) Date de publication et mention de la délivrance du brevet: **23.04.2025**
(21) Numéro de dépôt: 22724234.4
(22) Date de dépôt: 27.04.2022
(51) Int. Cl.: F02K 1/72, F02C 7/28

(54) **INVERSEUR DE POUSSÉE POUR UNE NACELLE D'UN TURBORÉACTEUR À DOUBLE FLUX D'AÉRONEF**
SCHUBUMKEHRVORRICHTUNG FÜR DIE GONDEL EINES TURBOFANTRIEBWERKS EINES FLUGZEUGS
THRUST REVERSER FOR THE NACELLE OF AN AIRCRAFT TURBOFAN ENGINE

(30) Priorité: 30.04.2021 FR 2104530
(43) Date de publication de la demande: 06.03.2024
(73) Titulaire: Safran Nacelles, 76700 Gonfreville-l'Orcher (FR)
(72) Inventeur: PASCAL, Sébastien Laurent Marie, 77550 MOISSY-CRAMAYEL (FR); BISANTI, Luigi, 77550 MOISSY-CRAMAYEL (FR)
(74) Mandataire: Gevers & Orès
(86) Numéro de dépôt international: PCT/FR2022/050797
(87) Numéro de publication internationale: WO 2022/229556

(56) Documents cités:
- US-A- 3 797 785
- US-A1- 2020 003 151
- US-B2- 6 385 964

## Description

### Domaine technique de l'invention

L'invention est relative au domaine des nacelles de turboréacteur à double flux d'aéronef, et en particulier aux inverseurs de poussée qui équipent ces nacelles.

### Arrière-plan technique

L'arrière-plan technique comprend notamment les documents FR-A1-2 938 878, FR-A1-2 954 410, US-A1-2020/003151, US-A-3,797,785 et US-B2-6,385,964.

Les inverseurs de poussée sont aujourd'hui largement répandus dans les nacelles d'aéronef et, en particulier, dans les nacelles qui abritent un turboréacteur à double flux. De manière connue, un tel turboréacteur génère, par l'intermédiaire des pâles d'une soufflante en rotation, un flux d'air chaud (appelé flux primaire) issu d'une chambre de combustion, et un flux d'air froid (appelé flux secondaire) qui circule à l'extérieur du turboréacteur à travers un canal annulaire, formé entre un carénage du turboréacteur et une paroi interne de la nacelle. Les deux flux d'air sont ensuite éjectés hors du turboréacteur par l'arrière de la nacelle et génèrent ainsi une poussée.

Dans une telle configuration, le rôle d'un inverseur de poussée est, lors d'une phase d'atterrissage de l'aéronef, d'améliorer sa capacité de freinage au sol en redirigeant vers l'avant au moins une partie de la poussée générée par le turboréacteur. En particulier, lorsque l'inverseur de poussée est en action, il obstrue le canal annulaire du flux d'air froid (i.e. le flux secondaire) et dirige ce flux vers l'avant de la nacelle, générant de ce fait une contre-poussée.

Les moyens mis en œuvre pour réaliser cette réorientation du flux d'air froid varient suivant le type d'inverseur. Cependant, dans tous les cas, la structure d'un inverseur de poussée comprend un ou des capots mobiles déplaçables entre, d'une part, une position déployée (aussi appelée position d'inversion de poussée) dans laquelle ils ouvrent dans la nacelle un passage destiné au flux dévié, et d'autre part, une position d'escamotage (aussi appelée position de jet direct) dans laquelle ils ferment ce passage. Les capots peuvent ainsi remplir une fonction d'activation d'autres moyens de déviation tels que des volets. Dans ce cas, les volets, actionnés par le déplacement des capots mobiles, viennent obstruer, au moins en partie, le canal dans lequel circule le flux secondaire.

En outre, dans le cas d'un inverseur de poussée dit à grilles de déviation, la réorientation du flux d'air est ensuite effectuée par des grilles de déviation.

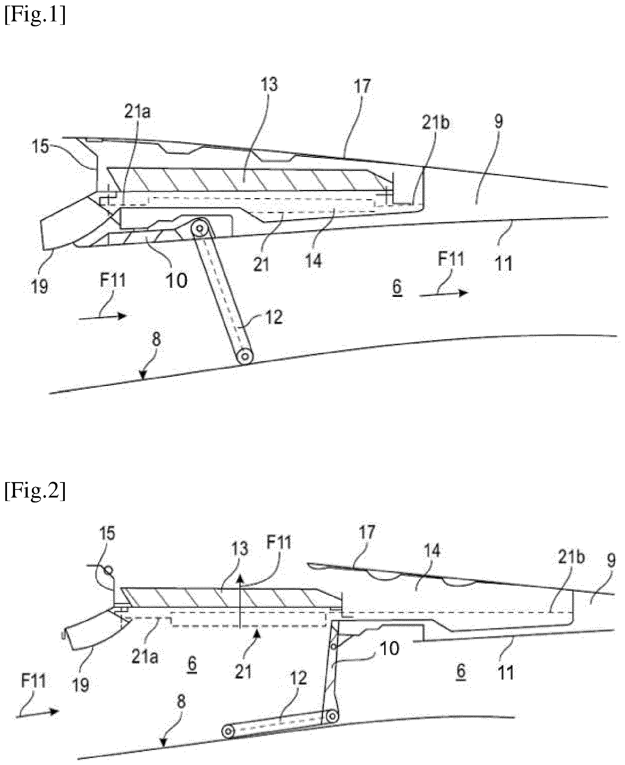

Un inverseur de l'art antérieur est illustré aux figures 1 et 2. Cet inverseur est du type inverseur à grilles ou inverseur à cascades.

Ce type d'inverseur comporte au moins un capot mobile 9 par rapport à une structure fixe comportant un cadre annulaire amont 15, le capot 9 présentant une paroi externe 17 et une paroi interne 11 destinée à délimiter, dans une position de jet direct du turboréacteur (figure 1), une paroi externe de la veine annulaire 6 dans lequel s'écoule le flux secondaire F11. L'inverseur comporte en outre des volets 10 montés de manière articulée sur le capot mobile 9 et actionnés par des bielles 12 lors du déplacement du capot mobile vers l'aval, de sorte que, dans une position d'inversion de poussée (figure 2), chaque volet 10 comporte une zone s'étendant dans le canal annulaire 6 de manière à dévier au moins une partie du flux secondaire F11 hors de la veine 6.

Dans le cas de ce type d'inverseur, la réorientation du flux secondaire F11 est effectuée par des grilles de déviation 13, le capot mobile 9 n'ayant qu'une simple fonction de coulissement visant à découvrir ou recouvrir ces grilles 13, la translation du capot mobile 9 s'effectuant selon un axe longitudinal sensiblement parallèle à l'axe de la nacelle 1 et de l'inverseur.

Un logement 14 est ménagé dans le capot 9 et permet de loger les grilles 13 lorsque l'inverseur n'est pas actionné, c'est-à-dire en position de jet direct, comme cela est représenté à la figure 1. En variante, les grilles 13 pourraient être montées coulissantes et logées dans la structure fixe.

Les grilles 13 sont disposées de manière adjacente les unes par rapport aux autres, dans une zone annulaire entourant le canal annulaire 6, les grilles 13 étant disposées bord à bord de manière à ce qu'un intervalle le plus petit possible soit ménagé entre celles-ci. De cette manière, la grande majorité du flux secondaire F11 dévié par les volets 10 passe au travers des grilles 13.

Les grilles peuvent être fixées par leurs extrémités amont à la structure, comme cela est illustré dans les dessins. En variante et comme décrit dans la demande antérieure FR-A1-3 076 865, les grilles peuvent être fixées par leurs extrémités aval au capot.

Un élément annulaire de déviation 19, couramment appelé bord de déviation, recouvre la périphérie interne du cadre 15. Cet élément de déviation 19 a en section une forme arrondie et s'étend depuis la périphérie externe de la veine annulaire 6 jusqu'à l'extrémité amont des grilles 13. Le cadre 15 et l'élément de déviation 19 forment une structure annulaire fixe.

L'inverseur de poussée comprend en outre des moyens de déplacement et de guidage des capots mobiles 9 qui comprennent en général des actionneurs 21 qui ont chacun une forme allongée et s'étendent parallèlement à l'axe de l'inverseur de poussée. Chaque actionneur 21 a une extrémité amont 21a fixée à la structure fixe comportant le cadre 15, et une extrémité aval 21b qui est fixée au capot. Dans la variante précitée où les grilles sont montées coulissantes, l'actionneur est monté entre la structure fixe et les grilles.

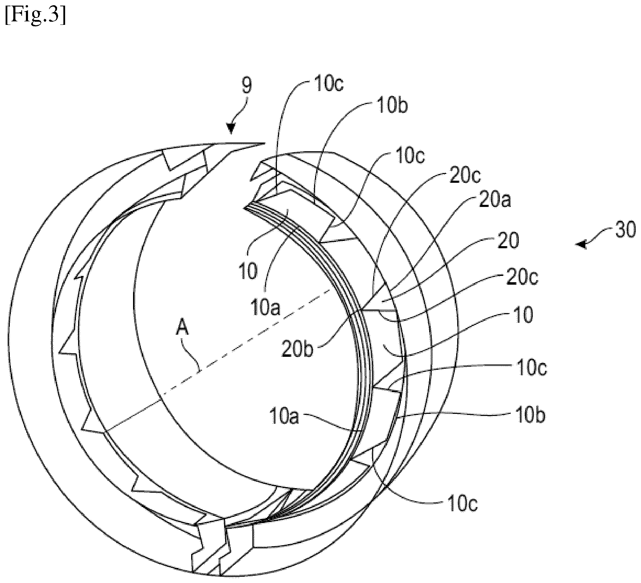

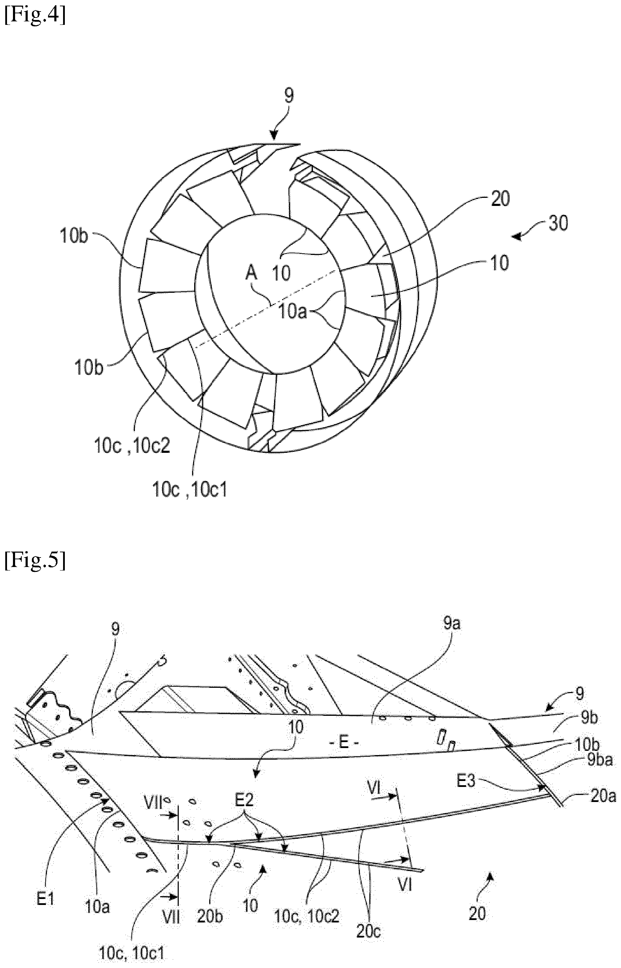

Les figures 3 et 4 permettent de voir les volets 10 dans la première position correspondant à la figure 1 (figure 3), et dans la seconde position de déviation du flux secondaire F11 correspondant à la figure 2 (figure 4).

Ces figures 3 et 4 permettent de voir la forme de chacun de ces volets 10 et permettent de voir également des carénages 20 qui sont portés par le capot 9 et qui sont disposés entre les volets 10.

Les carénages 20 sont répartis autour de l'axe A de l'inverseur de poussée 30 et ont chacun une forme générale triangulaire ou tronconique. Chacun de ces carénages 20 comprend une base aval 20a reliée au capot, une pointe amont 20b, et deux bords latéraux 20c reliant la pointe 20b à la base 20a.

Les volets 10 sont répartis autour de l'axe A et montés entre les carénages 20. Chaque volet 10 comprend :
° un bord amont 10a destiné à être situé en aval de l'élément de déviation 19 (avec en général interposition d'une virole intermédiaire) dans la première position,
° un bord aval 10b destiné à affleurer le capot 9 dans la première position, et
°des bords latéraux 10c comportant chacun deux parties rectilignes, respectivement amont 10c1 et aval 10c2. Les parties amont 10c1 des bords latéraux 10c des volets 10 sont destinés à affleurer les parties amont 10c1 des bords latéraux 10c de volets 10 adjacents dans la première position, et les parties aval 10c2 des bords latéraux 10c des volets 10 sont destinés d'une part à affleurer les bords latéraux 20c des carénages 20 dans la première position (figure 3), et d'autre part les parties aval 10c2 des bords latéraux 10c des volets 10 dans la seconde position (figure 4).

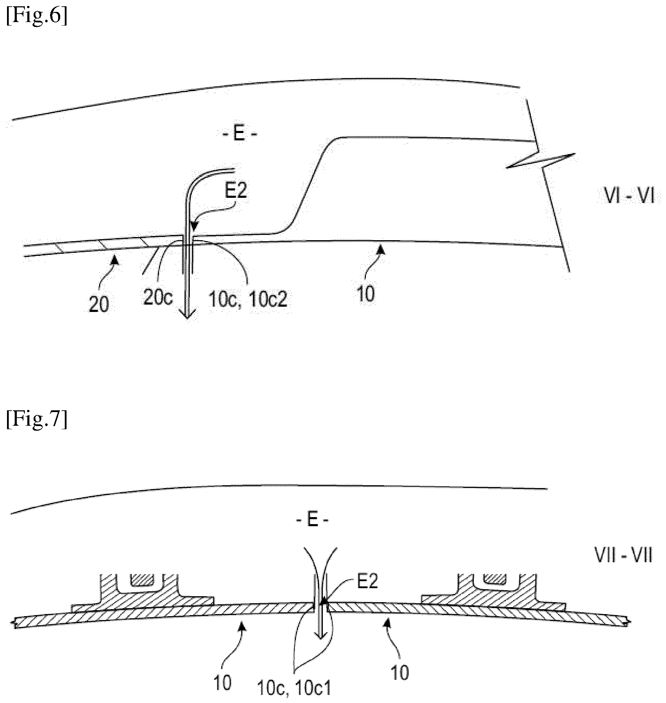

Les figures 5 et 6 sont des vues à plus grande échelle de volets 10 et de carénages 20 et montrent que les volets 10 et les carénages 20 s'étendent dans le prolongement les uns des autres dans la première position précitée.

La figure 5 montre également que les volets 10 s'étendent à l'intérieur d'une portion annulaire amont 9a du capot 9 et à distance radiale de cette portion 9a. Le capot 9 comprend en outre une portion annulaire aval 9b qui s'étend dans le prolongement des volets 10 et des carénages 20 vers l'aval. Autrement dit, les bases aval 20a des carénages 20 sont reliées à une extrémité amont 9ba de cette portion aval 9b du capot 9, et les bords aval 10b des volets 10 affleurent cette extrémité amont 9ba de la portion aval 9b du capot 9 dans la première position précitée.

Les volets 10 définissent avec la portion amont du capot 9 un espace annulaire E.

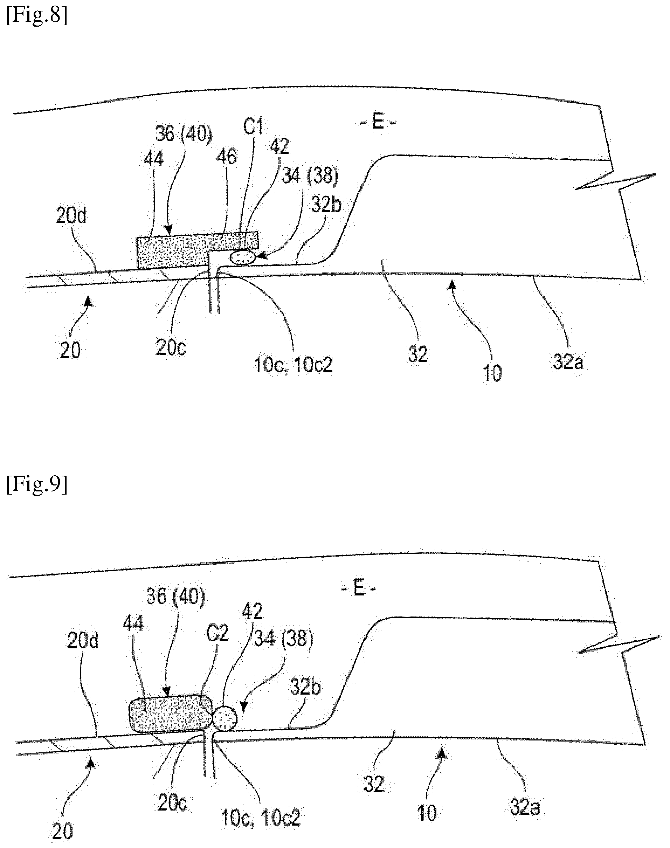

En fonctionnement, de l'air du flux secondaire F11 peut pénétrer dans cet espace E par l'interstice E1 formé entre les bords amont 10a des volets 10 et l'élément de déviation 19 (ou entre les bords amont 10a et la virole intermédiaire interposée entre les volets 10 et l'élément de déviation 19). Cet air circule dans l'espace E, puis est éjecté par les interstices E2, E3 formés d'une part entre les bords latéraux 10c des volets 10 et les bords latéraux 10c, 20c des volets 10 adjacents (figure 8) ou des carénages 20 (figure 7), et entre les bords aval 10b des volets 10 et l'extrémité amont 9ba de la portion aval 9b du capot 9. Lors de l'éjection de cet air, des structures tourbillonnaires se forment dans la veine secondaire 6, générant des pertes de poussée, ce qui est problématique.

Une première solution à ce problème consisterait à réduire le plus possible les dimensions des interstices E1, E2 et E3. Toutefois, la gestion de ces dimensions est de plus en plus complexe par l'utilisation de matériaux composites pour les volets. Ces matériaux sont relativement souples et ont tendance à se déformer en fonctionnement. Il est donc très difficile de maîtriser les dimensions des interstices en particulier pour les turboréacteurs à grand diamètre.

Une deuxième solution consisterait à prévoir de joints d'étanchéité à l'amont des volets 10, entre les bords amont 10a de ces volets et l'élément de déviation 19, pour éviter l'entrée d'air dans l'espace E. Cependant, cette solution ne serait pas non plus satisfaisante car les joints augmenteraient les efforts appliqués par l'actionneur 21 sur l'élément de déviation 19. Les joints devraient être de dimensions relativement importantes pour compenser les déplacements relatifs entre la structure fixe et les éléments mobiles, ce qui augmenterait leur masse. Par ailleurs, en position d'inversion de poussée, la présence des joints à l'amont des volets 10 pourrait gêner la cinématique d'ouverture de l'inverseur de poussée en venant au contact du capot 9 ou d'autres éléments du turboréacteur dans la seconde position d'inversion de poussée.

Une troisième solution consisterait à prévoir des volets 10 avec des parois équipées d'extensions latérales élastiquement déformables. Ces extensions latérales souples s'étendraient dans le prolongement de la paroi principale de chaque volet et définiraient les bords latéraux de ce volet. Ces extensions seraient destinées à coopérer à étanchéité avec les éléments situés au voisinage du volet 10. Cependant, cette solution ne serait pas non plus satisfaisante. En position d'inversion de poussée, ces extensions souples seraient soumises au flux inversé instationnaire, ce qui les endommagerait. Ces extensions devraient être intégrées aux volets 10 et ne seraient pas remplaçables facilement. Par ailleurs, la présence de ces extensions latérales se traduirait par une diminution des surfaces acoustiques des volets 10 et par des risques de contact et de détérioration avec le capot 9 ou d'autres éléments du turboréacteur dans la seconde position d'inversion de poussée.

L'invention propose une solution simple, efficace et économique au problème évoqué dans ce qui précède.

### Résumé de l'invention

La présente invention propose un inverseur de poussée pour une nacelle d'un turboréacteur à double flux d'aéronef, cet inverseur de poussée ayant une forme générale annulaire autour d'un axe et comportant :
- une structure annulaire amont fixe qui s'étend autour d'une veine annulaire d'écoulement d'un flux secondaire,
- des grilles de déviation qui sont réparties autour de l'axe,
- au moins un capot annulaire mobile en translation axiale vis-à-vis de la structure fixe, depuis une position amont dans laquelle sont recouvertes, les grilles jusqu'à une position aval d'inversion de poussée dans laquelle les grilles sont découvertes, ce capot comportant une portion annulaire amont et une portion annulaire aval
- des carénages portés par le capot, ces carénages étant répartis autour de l'axe, chacun de ces carénages s'étendant à l'intérieur et à distance de la portion amont du capot et comportant une base aval reliée à une extrémité amont de la portion annulaire aval du capot, une pointe amont, et deux bords latéraux reliant la pointe à la base,
- des volets de déviation du flux secondaire à travers les grilles, les volets étant répartis autour de l'axe et montés entre les carénages, les volets étant mobiles depuis une première position dans laquelle ils s'étendent à l'intérieur et à distance de la portion amont du capot et dans le prolongement des carénages adjacents, lorsque le capot est dans la position amont, et une seconde position dans laquelle ils s'étendent dans la veine pour dévier le flux secondaire, lorsque le capot est dans sa position aval, chacun de ces volets comportant :
   ° un bord amont destiné à affleurer ladite structure amont dans la première position,
   ° un bord aval destiné à affleurer l'extrémité amont de la portion aval du capot dans la première position, et
   °des bords latéraux comportant chacun deux parties, respectivement amont et aval, les parties amont des bords latéraux des volets étant destinés à affleurer les parties amont des bords latéraux de volets adjacents dans la première position, et les parties aval des bords latéraux des volets étant destinés d'une part à affleurer les bords latéraux des carénages dans la première position, et d'autre part les parties aval des bords latéraux des volets dans la seconde position,
- et un dispositif de déplacement du capot et des volets, voire des grilles,

caractérisé en ce que chacun des volets comporte une paroi rigide s'étendant jusqu'aux bords amont, aval et latéraux, et définissant ces bords, cette paroi comportant une face interne aérodynamique et une face externe en regard de la portion amont du capot dans la première position,
et en ce que l'inverseur comprend en outre :
   - des premiers éléments d'étanchéité situés sur la face externe de la paroi de chaque volet et/ou sur une face externe des carénages, ces premiers éléments d'étanchéité s'étendant le long des bords latéraux du volet et/ou des carénages de façon à assurer une étanchéité le long de ces bords dans la première position.

L'invention permet de limiter les écoulements d'air depuis l'espace précité, situé entre les volets et la portion amont du capot, à travers les interstices latéraux situés entre les bords latéraux des volets et les bords latéraux des carénages et des volets adjacents. Les éléments d'étanchéité permettent par exemple à l'air contenu dans cet espace de perdre son énergie, ou d'être dévié ou bloqué, avant de rejoindre les interstices.

Dans la présente demande, on entend par « rigide », un élément ou un matériau qui n'est pas souple ou élastiquement déformable. Un élément ou matériau rigide est donc un élément ou matériau non élastiquement déformable. A contrario, on entend par « souple », un élément ou un matériau qui est élastiquement déformable.

Dans la présente demande, on entend par « étanchéité », le fait de réduire voire d'annuler les fuites de gaz entre deux éléments. En cas de contact étanche entre ces deux éléments, les fuites de gaz sont empêchées. En l'absence de contact, par exemple dans le cas où le jeu entre les éléments serait réduit pour réduire les fuites entre ces éléments, l'étanchéité serait procurée par la perte d'énergie de l'écoulement de gaz entre les éléments.

L'inverseur selon l'invention peut comprendre une ou plusieurs des caractéristiques suivantes, prises isolément les unes des autres ou en combinaison les unes avec les autres :
--- les carénages ont chacun une forme générale triangulaire ou tronconique ;
   -- dans la position amont précitée, les grilles sont recouvertes par la structure annulaire amont ou le capot annulaire ;
   -- chacun de ces carénages s'étend dans la continuité de la portion annulaire aval du capot, et est donc intégré à cette portion aval ;
   -- le dispositif de déplacement comprend au moins un actionneur ;
   -- le dispositif ou l'actionneur comprend une première extrémité axiale, en particulier amont, fixée à ladite structure, et une seconde extrémité axiale, en particulier aval, fixée audit capot ;
   -- les grilles comprennent des extrémités amont fixées à ladite structure ou des extrémités aval fixées audit capot ;
      - chacun des volets est dépourvu d'élément d'étanchéité le long de son bord amont ;
      - les premiers éléments d'étanchéité sont rapportés et fixés sur la face externe de la paroi de chaque volet et/ou sur la face externe des carénages ;
      - les premiers éléments d'étanchéité sont intégrés à la paroi du volet et/ou au carénage ;
   -- les premiers éléments d'étanchéité sont au moins en partie (ou en totalité) rigides ;
      - les premiers éléments d'étanchéité comprennent :
         - un premier organe longitudinal élastiquement déformable qui s'étend le long du bord latéral du volet, et un second organe longitudinal rigide qui s'étend le long du bord latéral du carénage et qui coopère par appui étanche avec ledit premier organe, dans ladite première position,
         - ou inversement, un premier organe longitudinal élastiquement déformable qui s'étend le long du bord latéral du carénage, et un second organe longitudinal rigide qui s'étend le long du bord latéral du volet et qui coopère par appui étanche avec ledit premier organe, dans ladite première position ;
   -- le premier organe a en section transversale une forme circulaire ou elliptique ;
   -- le premier organe comprend au moins une lèvre d'étanchéité ;
      - ledit appui étanche est un appui orienté radialement ou un appui orienté circonférentiellement par rapport audit axe ;
      - le second organe a en section transversale une forme en L ou parallélépipédique;
      - le second organe comprend un profilé longitudinal s'étendant le long du bord sur lequel il est fixé et générant une surépaisseur radiale sur ce bord ;
      - le profilé comprend un rebord longitudinal formant un prolongement latéral du bord sur lequel est fixé le second organe ;
      - les premiers éléments d'étanchéité comprennent :
         - un premier organe longitudinal rigide qui s'étend le long du bord latéral du volet, et éventuellement un second organe longitudinal rigide qui s'étend le long du bord latéral du carénage et qui est séparé par un jeu prédéterminé dudit premier organe, dans ladite première position,
         - ou inversement, un premier organe longitudinal rigide qui s'étend le long du bord latéral du carénage, et éventuellement un second organe longitudinal rigide qui s'étend le long du bord latéral du volet et qui est séparé par un jeu prédéterminé dudit premier organe, dans ladite première position ;
      - ledit jeu est un jeu radial ou un jeu circonférentiel par rapport audit axe ;
      - chacun des volets comporte :
         - au moins un second élément d'étanchéité situé sur la face externe de la paroi et/ou sur l'extrémité amont de la portion aval du capot, ce second élément d'étanchéité s'étendant le long du bord aval du volet de façon à assurer une étanchéité ou à réduire les fuites le long de ce bord dans la première position ;
      - le second élément est identique auxdits premiers éléments ;
      - le second élément d'étanchéité est rapporté et fixé sur la face externe et/ou sur l'extrémité amont de la portion aval du capot;
      - le second élément d'étanchéité est intégré à la paroi du volet et/ou sur l'extrémité amont de la portion aval du capot;
   -- le second élément d'étanchéité est au moins en partie (ou en totalité) rigide.

La présente invention concerne également un ensemble propulsif d'aéronef comportant un turboréacteur à double flux et un inverseur de poussée tel que décrit ci-dessus.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig.1] la figure 1 est une vue schématique partielle, en coupe longitudinale, d'un inverseur de poussée selon l'art antérieur en position de jet direct ;
[Fig.2] la figure 2 est une vue schématique partielle, en coupe longitudinale, de l'inverseur de poussée de la figure 1 en position d'inversion de poussée ;
[Fig.3] la figure 3 est une vue schématique en perspective d'un inverseur de poussée, dans la position de jet direct ;
[Fig.4] la figure 4 est une vue schématique en perspective de l'inverseur de poussée de la figure 3, dans la position d'inversion de poussée ;
[Fig.5] la figure 5 est une vue schématique partielle et en perspective d'un inverseur de poussée et montre des volets et des carénages de cet inverseur, dans la position de jet direct ;
[Fig.6] la figure 6 est une vue schématique en coupe selon la ligne VI-VI de la figure 5 ;
[Fig.7] la figure 7 est une vue schématique en coupe selon la ligne VII-VII de la figure 5 ;
[Fig.8] la figure 8 est une vue similaire à celle de la figure 5 et représente un premier mode de réalisation de l'invention ;
[Fig.9] la figure 9 est une vue similaire à celle de la figure 5 et représente un deuxième mode de réalisation de l'invention ;
[Fig.10] la figure 10 est une vue similaire à celle de la figure 5 et représente un troisième mode de réalisation de l'invention ; et
[Fig.11] la figure 11 est une vue similaire à celle de la figure 5 et représente un quatrième mode de réalisation de l'invention.

### Description détaillée de l'invention

Les figures 1 à 7 ont été décrites dans ce qui précède.

On se réfère désormais aux figures 8 à 12 qui illustrent plusieurs modes de réalisation d'un inverseur de poussée 30 selon l'invention pour une nacelle de turboréacteur d'aéronef.

La description qui précède en relation avec les figures 1 à 7 s'applique à l'inverseur de poussée 30 selon l'invention.

Cet inverseur 30 comprend notamment :
- une structure annulaire amont fixe qui s'étend autour d'une veine annulaire d'écoulement d'un flux secondaire, cette structure comportant le carter 15 et l'élément de déviation 19 dans l'exemple représenté aux figures 1 et 2,
- des grilles de déviation 13 qui sont réparties autour de l'axe A de l'inverseur 30,
- au moins un capot annulaire 9 mobile en translation axiale vis-à-vis de la structure fixe, depuis une position amont (figures 1, 3, 5 et 6) dans laquelle les grilles 13 sont recouvertes, jusqu'à une position aval d'inversion de poussée (figures 2 et 4) dans laquelle les grilles 13 sont découvertes, ce capot 9 comportant une portion annulaire amont 9a et une portion annulaire aval 9b,
- des carénages 20 portés par le capot 9, ces carénages 9 étant répartis autour de l'axe A et ayant chacun une forme générale triangulaire ou tronconique dans l'exemple représenté, chacun de ces carénages 20 s'étendant à l'intérieur et à distance de la portion amont 9a du capot 9 et comportant une base aval 20a reliée à une extrémité amont 9ba de la portion annulaire aval 9b du capot 9, une pointe amont 20b, et deux bords latéraux 20c reliant la pointe 20b à la base 20a,
- des volets 10 de déviation du flux secondaire F11 à travers les grilles 13, les volets 10 étant répartis autour de l'axe A et montés entre les carénages 20, les volets 10 étant mobiles depuis une première position (figures 1, 3, 5 et 6) dans laquelle ils s'étendent à l'intérieur et à distance de la portion amont 9a du capot et dans le prolongement des carénages 20 adjacents, lorsque le capot 9 est dans la position amont, et une seconde position (figures 2 et 4) dans laquelle ils s'étendent dans la veine 6 pour dévier le flux secondaire F11, lorsque le capot 9 est dans sa position aval.

Chacun des volets 10 comporte :
° un bord amont 10a destiné à affleurer la structure amont dans la première position,
° un bord aval 10b destiné à affleurer l'extrémité amont 9ba de la portion aval 9b du capot 9 dans la première position, et
°des bords latéraux 10c comportant chacun deux parties, respectivement amont 10c1 et aval 10c2. Ces parties amont 10c1 des bords latéraux 10c des volets 10 sont destinés à affleurer les parties amont 10c1 des bords latéraux 10c de volets adjacents 10 dans la première position, et les parties aval 10c2 des bords latéraux 10c des volets 10 étant destinés d'une part à affleurer les bords latéraux 20c des carénages 20 dans la première position, et d'autre part les parties aval 10c2 des bords latéraux 10c des volets 10 dans la seconde position.

L'inverseur 30 comprend en outre des actionneurs 20 de déplacement du capot 9 et des volets 10 entre les positions précitées.

Chacun des volets 10 comporte une paroi rigide 32 s'étendant jusqu'aux bords amont 10a, aval 10b et latéraux 10c, et définissant ces bords. Cette paroi 32 comporte une face interne 32a aérodynamique et une face externe 32b en regard de la portion amont 9a du capot 9 dans la première position. Cette paroi 32 est par exemple réalisée en aluminium, ou composite thermodurcissable, ou composite thermoplastique.

Selon l'invention, l'inverseur 30 comporte en outre des éléments d'étanchéité situés sur la face externe 32b de la paroi 32 de chaque volet 10 et/ou sur une face externe 20d des carénages 20.

Les éléments d'étanchéité s'étendent de préférence le long de bords périphériques des volets 10 et des carénages 20. On appelle premiers éléments d'étanchéité, référencés 34, les éléments d'étanchéité s'étendant le long des bords latéraux 10c, et premiers éléments d'étanchéité, référencés 36, les éléments d'étanchéité s'étendant le long des bords latéraux 20c des carénages 20. Ces premiers éléments d'étanchéité 34, 36 assurent une étanchéité par perte d'énergie des écoulements latéraux le long de ces bords latéraux 10c, 20c dans la première position.

On appelle seconds éléments d'étanchéité, référencés 38, les éléments d'étanchéité s'étendant le long des bords aval 10b des volets, et seconds éléments d'étanchéité, référencés 40, les éléments d'étanchéité s'étendant le long des bords en regard de l'extrémité amont 9ba de la portion aval 9b du capot 9. Ces seconds éléments d'étanchéité 38, 40 assurent une étanchéité le long de ces bords 10b dans la première position.

Les figures 8 à 11 illustrent plusieurs modes de réalisation de ces éléments d'étanchéité 34 à 40. Bien que les figures montrent le cas particulier de l'étanchéité (et des éléments d'étanchéité 34, 36) entre le bord 10c d'un volet 10 et le bord 20c d'un carénage, ces figures et la description associée sont transposables au cas de l'étanchéité (et des éléments d'étanchéité 34, 36) entre deux bords 10c de deux volets 10 adjacents, et de l'étanchéité (et des éléments d'étanchéité 38, 40) entre le bord 10b d'un volet et l'extrémité amont 9ba de la portion aval 9b du capot 9.

Dans le premier mode de réalisation représenté à la figure 8, les premiers éléments d'étanchéité 34 du volet 10 comprennent un premier organe longitudinal 42 élastiquement déformable qui s'étend le long du bord latéral 10c du volet 10.

Les premiers éléments d'étanchéité 36 du carénage 20 comprennent un second organe longitudinal 44 rigide qui s'étend le long du bord latéral 20c du carénage 20 et qui coopère par appui étanche avec l'organe 42, dans ladite première position.

La configuration inverse de la figure 8 est toutefois envisageable. L'organe 42 pourrait s'étendre le long du bord latéral 20c du carénage 20, et l'organe 44 pourrait s'étendre le long du bord latéral 10c du volet 10.

Bien que cela ne soit pas limitatif, le premier organe 42 a en section transversale une forme circulaire ou elliptique, en particulier au repose à l'état sans contrainte. Cet organe 42 a de préférence une section pleine et est par exemple réalisé en élastomère. Dans l'exemple représenté, l'appui étanche C1 entre les organes 42, 44 est un appui orienté radialement par rapport à l'axe A de l'inverseur 30.

Le second organe 44 comprend un profilé longitudinal s'étendant le long du bord 20c et générant une surépaisseur radiale sur ce bord. Cet organe 44 ou ce profilé comprend un rebord longitudinal 46 qui forme un prolongement latéral du bord 20c et qui recouvre extérieurement le bord 10c du volet afin de prendre appui en direction radiale sur l'organe 42. Dans ce mode de réalisation, l'organe 44 ou le profilé a en section transversale une forme générale en L.

Le mode de réalisation de la figure 9 diffère du précédent mode de réalisation en ce que l'organe 44 ne comprend pas de rebord 46 et l'appui étanche C2 entre les organes 42, 44 est un appui orienté circonférentiellement par rapport à l'axe A de l'inverseur 30. Un côté longitudinal de l'organe 44 ou du profilé prend appui en direction circonférentielle sur l'organe 42. Dans ce mode de réalisation, l'organe 44 ou le profilé a en section transversale une forme générale parallélépipédique.

La configuration inverse de la figure 9 est également envisageable. L'organe 42 pourrait s'étendre le long du bord latéral 20c du carénage 20, et l'organe 44 pourrait s'étendre le long du bord latéral 10c du volet 10.

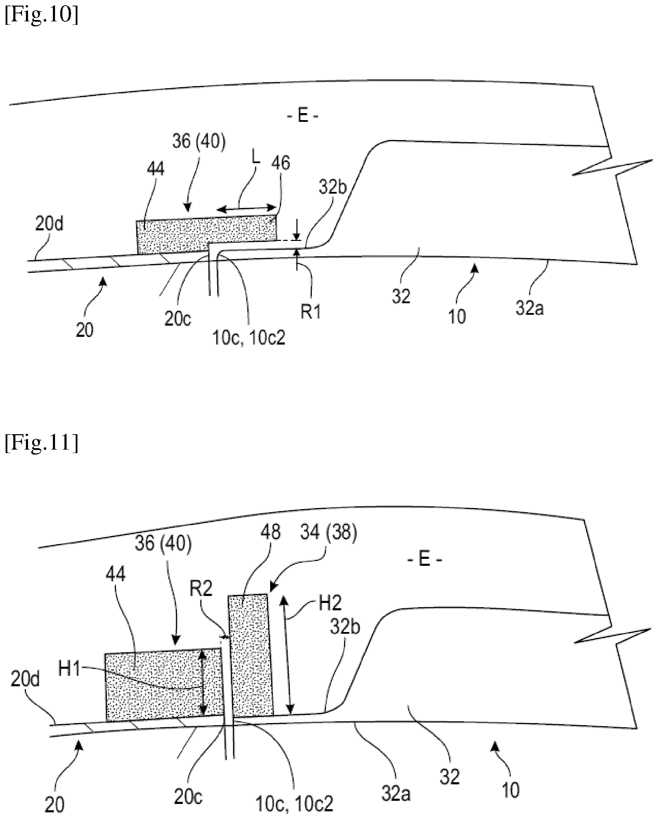

Le mode de réalisation de la figure 10 diffère du premier mode de réalisation en ce qu'il n'y a pas d'organe 42. Seul l'organe 44 est présent sur le carénage 20. Il n'y a pas non plus d'appui étanche entre des premiers éléments d'étanchéité.

L'étanchéité entre le carénage et le volet est ici assurée par un jeu prédéterminé entre l'organe 44 et le bord latéral 10c du volet. Dans l'exemple représenté, ce jeu R1 est orienté en direction radiale.

L'organe 44 a également une section en forme de L et comprend un rebord 46 qui recouvre le bord latéral 10c du volet et qui est séparé de ce bord par le jeu radial R1. La configuration inverse de la figure 10 est également envisageable. L'organe 44 pourrait pourrai s'étendre le long du bord latéral 10c du volet 10 et définir un jeu radial R1 avec le bord 20c du carénage.

Dans le mode de réalisation de la figure 11, les premiers éléments d'étanchéité 34 du volet 10 comprennent un premier organe longitudinal 48 rigide qui s'étend le long du bord latéral 10c du volet 10.

Les premiers éléments d'étanchéité 36 du carénage 20 comprennent un second organe longitudinal 44 rigide qui s'étend le long du bord latéral 20c du carénage 20.

Dans cet exemple, chacun des organes 42, 44 comprend un profilé longitudinal s'étendant le long du bord correspondant et générant une surépaisseur radiale sur ce bord. Chaque organe 42, 44 ou profilé a en section transversale une forme générale parallélépipédique.

L'étanchéité entre le carénage 20 et le volet 10 est ici assurée par un jeu prédéterminé entre les organes 42, 44. Dans l'exemple représenté, ce jeu R2 est orienté en direction circonférentielle.

Dans les différents modes de réalisation des figures 8 à 11, les matériaux rigides utilisés pour les éléments d'étanchéité peuvent être un métal, un composite ou un thermoplastique, téflon^{®}, etc. Les matériaux souples utilisés peuvent être un élastomère ou caoutchouc. En présence d'un élément d'étanchéité souple, l'étanchéité est obtenue par appui, cet appui pouvant être maintenu lorsque les pièces subissent des déplacements relatifs. En l'absence d'élément d'étanchéité souple, l'étanchéité est obtenue par la réalisation de chicane ou d'obstacle limitant le passage d'air. L'optimisation des dimensions (L, R1, R2, H1, H2...), des organes et profilés, et en particulier de leurs parties définissent des chicanes ou recouvrements, permet d'optimiser l'étanchéité de l'assemblage. Par ailleurs, l'absence de contact entre les pièces permet de limiter le risque d'usure notamment.

L'invention est particulièrement avantageuse car elle permet de solutionner le problème évoqué dans ce qui précède, sans affecter les faces internes aérodynamiques des volets qui doivent être définies par des parois rigides pour ne pas altérer les performances de déviation et acoustiques des volets.

## Revendications

1. Inverseur de poussée (30) pour une nacelle d'un turboréacteur à double flux d'aéronef, cet inverseur de poussée ayant une forme générale annulaire autour d'un axe (A) et comportant :
- une structure annulaire amont (15, 19) fixe qui s'étend autour d'une veine annulaire (6) d'écoulement d'un flux secondaire (F11),
- des grilles de déviation (13) qui sont réparties autour de l'axe,
- au moins un capot annulaire (9) mobile en translation axiale vis-à-vis de la structure fixe, depuis une position amont dans laquelle les grilles (13) sont recouvertes, jusqu'à une position aval d'inversion de poussée dans laquelle les grilles sont découvertes, ce capot (9) comportant une portion annulaire amont (9a) et une portion annulaire aval (9b),
- des carénages (20) portés par le capot (9), ces carénages étant répartis autour de l'axe (A), chacun de ces carénages s'étendant à l'intérieur et à distance de la portion amont (9a) du capot (9) et comportant une base aval (20a) reliée à une extrémité amont (9ba) de la portion annulaire aval (9b) du capot (9), une pointe amont (20b), et deux bords latéraux (20c) reliant la pointe à la base,
- des volets (10) de déviation du flux secondaire (F11) à travers les grilles (13), les volets étant répartis autour de l'axe (A) et montés entre les carénages (20), les volets étant mobiles depuis une première position dans laquelle ils s'étendent à l'intérieur et à distance de la portion amont (9a) du capot (9) et dans le prolongement des carénages (20) adjacents, lorsque le capot (9) est dans la position amont, et une seconde position dans laquelle ils s'étendent dans la veine (6) pour dévier le flux secondaire (F11), lorsque le capot (9) est dans sa position aval, chacun de ces volets (10) comportant :
° un bord amont (10a) destiné à affleurer ladite structure amont dans la première position,
° un bord aval (10b) destiné à affleurer l'extrémité amont (9ba) de la portion aval (9b) du capot (9) dans la première position, et
°des bords latéraux (10c) comportant chacun deux parties, respectivement amont (10c1) et aval (10c2), les parties amont (10c1) des bords latéraux (10c) des volets (10) étant destinés à affleurer les parties amont (10c1) des bords latéraux de volets adjacents dans la première position, et les parties aval (10c2) des bords latéraux (10c) des volets (10) étant destinés d'une part à affleurer les bords latéraux (20c) des carénages (20) dans la première position, et d'autre part les parties aval (10c2) des bords latéraux (10c) des volets (10) dans la seconde position,
- et un dispositif (21) de déplacement du capot (9) et des volets (10),
**caractérisé en ce que** chacun des volets (10) comporte une paroi (32) rigide s'étendant jusqu'aux bords amont (10a), aval (10b) et latéraux (10c), et définissant ces bords, cette paroi (32) comportant une face interne (32a) aérodynamique et une face externe (32b) en regard de la portion amont (9a) du capot (9) dans la première position,
et **en ce que** l'inverseur (30) comprend en outre :
- des premiers éléments d'étanchéité (34, 36) situés sur la face externe (32b) de la paroi (32) de chaque volet (10) et/ou sur une face externe (20d) des carénages (20), ces premiers éléments d'étanchéité s'étendant le long des bords latéraux (10c, 20c) du volet (10) et/ou des carénages (20) de façon à assurer une étanchéité le long de ces bords dans la première position.

2. Inverseur de poussée (30) selon la revendication 1, dans lequel les premiers éléments d'étanchéité (34, 36) comprennent :
- un premier organe longitudinal (42) élastiquement déformable qui s'étend le long du bord latéral (10c) du volet (10), et un second organe longitudinal (44) rigide qui s'étend le long du bord latéral (20c) du carénage (20) et qui coopère par appui étanche avec ledit premier organe (42), dans ladite première position,
- ou inversement, un premier organe longitudinal élastiquement déformable qui s'étend le long du bord latéral du carénage, et un second organe longitudinal rigide qui s'étend le long du bord latéral du volet et qui coopère par appui étanche avec ledit premier organe, dans ladite première position.

3. Inverseur de poussée (30) selon la revendication 2, dans lequel ledit appui étanche est un appui orienté radialement ou un appui orienté circonférentiellement par rapport audit axe.

4. Inverseur de poussée (30) selon la revendication 2 ou 3, dans lequel le second organe (44) a en section transversale une forme en L ou parallélépipédique.

5. Inverseur de poussée (30) selon l'une des revendications 2 à 4, dans lequel le second organe (44) comprend un profilé longitudinal s'étendant le long du bord sur lequel il est fixé et générant une surépaisseur radiale sur ce bord.

6. Inverseur de poussée (30) selon la revendication 5, dans lequel le profilé comprend un rebord longitudinal (46) formant un prolongement latéral du bord sur lequel est fixé le second organe (44).

7. Inverseur de poussée (30) selon la revendication 1, dans lequel les premiers éléments d'étanchéité comprennent :
- un premier organe longitudinal (48) rigide qui s'étend le long du bord latéral (10c) du volet (10), et éventuellement un second organe longitudinal (44) rigide qui s'étend le long du bord latéral (20c) du carénage (20) et qui est séparé par un jeu (R1, R2) prédéterminé dudit premier organe (48), dans ladite première position,
- ou inversement, un premier organe longitudinal rigide qui s'étend le long du bord latéral du carénage, et éventuellement un second organe longitudinal rigide qui s'étend le long du bord latéral du volet et qui est séparé par un jeu prédéterminé dudit premier organe, dans ladite première position.

8. Inverseur de poussée (30) selon la revendication 7, dans lequel ledit jeu est un jeu radial (R1) ou un jeu circonférentiel (R2) par rapport audit axe (A).

9. Inverseur de poussée (30) selon l'une des revendications précédentes, dans lequel chacun des volets (10) comporte :
- un second élément d'étanchéité (38, 40) situé sur la face externe (32b) de la paroi (32) et/ou sur l'extrémité amont (9ba) de la portion aval (9b) du capot (9), ce second élément d'étanchéité s'étendant le long du bord aval (10b) du volet de façon à assurer une étanchéité ou à réduire les fuites le long de ce bord dans la première position.

10. Inverseur de poussée (30) selon la revendication 9, dans lequel le second élément d'étanchéité est rapporté et fixé sur la face externe et/ou sur l'extrémité amont de la portion aval du capot.

11. Inverseur de poussée (30) selon la revendication 9, dans lequel le second élément d'étanchéité est intégré à la paroi du volet et/ou sur l'extrémité amont de la portion aval du capot.

12. Inverseur de poussée (30) selon l'une des revendications précédentes, dans lequel chacun des volets est dépourvu d'élément d'étanchéité le long de son bord amont.

13. Inverseur de poussée (30) selon l'une des revendications précédentes, dans lequel les premiers éléments d'étanchéité sont rapportés et fixés sur la face externe de la paroi de chaque volet et/ou sur la face externe des carénages.

14. Inverseur de poussée (30) selon l'une des revendications 1 à 12, dans lequel les premiers éléments d'étanchéité sont intégrés à la paroi du volet et/ou au carénage.

15. Ensemble propulsif pour un aéronef, comportant un turboréacteur à double flux et un inverseur de poussée (30) selon l'une des revendications précédentes.

## Patentansprüche

1. Schubumkehrer (30) für eine Gondel eines Zweikreis-Turbotriebwerks eines Flugzeugs, wobei dieser Schubumkehrer eine allgemeine ringförmige Form um eine Achse (A) aufweist und Folgendes umfasst:
- eine festsitzende stromaufwärtige ringförmige Struktur (15, 19), die sich um eine ringförmige Ader (6) zum Ablassen eines Sekundärstroms (F11) erstreckt,
- Umleitungsgitter (13), die um die Achse verteilt sind,
- mindestens eine ringförmige Abdeckung (9), die gegenüber der festsitzenden Struktur ausgehend von einer stromaufwärtigen Position, in der die Gitter (13) verdeckt sind, bis zu eine stromabwärtigen Schubumkehrposition, in der die Gitter aufgedeckt sind, axial verschiebbar ist, wobei diese Abdeckung (9) einen stromaufwärtigen ringförmigen Abschnitt (9a) und einen stromabwärtigen ringförmigen Abschnitt (9b) umfasst,
- Verkleidungen (20), die von der Abdeckung (9) getragen werden, wobei diese Verkleidungen um die Achse (A) verteilt sind, wobei jede dieser Verkleidungen sich im Inneren und beabstandet von dem stromaufwärtigen Abschnitt (9a) der Abdeckung (9) erstreckt und eine stromabwärtige Basis (20a) umfasst, die mit einem stromaufwärtigen Ende (9ba) des stromabwärtigen ringförmigen Abschnitts (9b) der Abdeckung (9) verbunden ist, wobei eine stromaufwärtige Spitze (20b) und zwei seitliche Kanten (20c) die Spitze mit der Basis verbinden,
- Klappen (10) zur Umleitung des Sekundärstroms (F11) durch die Gitter (13) hindurch, wobei die Klappen um die Achse (A) verteilt sind und zwischen den Verkleidungen (20) montiert sind, wobei die Klappen bewegbar sind aus einer ersten Position, in der sie sich im Inneren und beabstandet zum stromaufwärtigen Abschnitt (9a) der Abdeckung (9) und in der Verlängerung der benachbarten Verkleidungen (20) erstrecken, wenn die Abdeckung (9) in der stromaufwärtigen Position ist, und einer zweiten Position, in der sie sich in der Ader (6) erstrecken, um den Sekundärstrom (F11) umzuleiten, wenn die Abdeckung (9) in ihrer stromabwärtigen Position ist, wobei jede dieser Klappen (10) Folgendes umfasst:
- eine stromaufwärtige Kante (10a), die dazu vorgesehen ist, die stromaufwärtige Struktur in der ersten Position zu berühren,
- eine stromabwärtige Kante (10b), die dazu vorgesehen ist, das stromaufwärtige Ende (9ba) des stromabwärtigen Abschnitts (9b) der Abdeckung (9) in der ersten Position zu berühren, und
- seitliche Kanten (10c), die jeweils zwei Teile, stromaufwärtig (10c1) bzw. stromabwärtig (10c2), umfassen, wobei die stromaufwärtigen Teile (10c1) der seitlichen Kanten (10c) der Klappen (10) dazu vorgesehen sind, die stromaufwärtigen Teile (10c1) der seitlichen Kanten benachbarter Klappen in der ersten Position zu berühren, und die stromabwärtigen Teile (10c2) der seitlichen Kanten (10c) der Klappen (10) dazu vorgesehen sind, einerseits die seitlichen Kanten (20c) der Verkleidungen (20) in der ersten Position und andererseits die stromabwärtigen Teile (10c2) der seitlichen Kanten (10c) der Klappen (10) in der zweiten Position zu berühren,
- und eine Vorrichtung (21) zur Verschiebung der Abdeckung (9) und der Klappen (10),
**dadurch gekennzeichnet, dass** jede der Klappen (10) eine steife Wand (32) umfasst, die sich bis zu den stromaufwärtigen (10a), stromabwärtigen (10b) und seitlichen (10c) Kanten erstreckt und diese Kanten definiert, wobei diese Wand (32) eine aerodynamische Innenseite (32a) und eine dem stromaufwärtigen Abschnitt (9a) der Abdeckung (9) zugewandte Außenseite (32b) in der ersten Position umfasst,
und dadurch, dass der Umkehrer (30) weiter umfasst:
- erste Abdichtungselemente (34, 36), die sich an der Außenseite (32b) der Wand (32) jeder Klappe (10) und/oder an einer Außenseite (20d) der Verkleidungen (20) befinden, wobei diese ersten Abdichtungselemente sich derart entlang der seitlichen Kanten (10c, 20c) der Klappe (10) und/oder der Verkleidungen (20) erstrecken, dass eine Abdichtung entlang dieser Kanten in der ersten Position gewährleistet wird.

2. Schubumkehrer (30) nach Anspruch 1, wobei die ersten Abdichtungselemente (34, 36) Folgendes umfassen:
- ein elastisch verformbares erstes längliches Organ (42), das sich entlang der seitlichen Kante (10c) der Klappe (10) erstreckt, und ein steifes zweites längliches Organ (44), das sich entlang der seitlichen Kante (20c) der Verkleidung (20) erstreckt und das in der ersten Position durch dichte Auflage mit dem ersten Organ (42) zusammenwirkt,
- oder umgekehrt ein elastisch verformbares erstes längliches Organ, das sich entlang der seitlichen Kante der Verkleidung erstreckt, und ein steifes zweites längliches Organ, das sich entlang der seitlichen Kante der Klappe erstreckt und das in der ersten Position durch dichte Auflage mit dem ersten Organ zusammenwirkt.

3. Schubumkehrer (30) nach Anspruch 2, wobei die dichte Auflage eine radial ausgerichtete Auflage oder eine in Bezug auf die Achse umlaufend ausgerichtete Auflage ist.

4. Schubumkehrer (30) nach Anspruch 2 oder 3, wobei das zweite Organ (44) einen L-förmigen oder quaderförmigen Querschnitt aufweist.

5. Schubumkehrer (30) nach einem der Ansprüche 2 bis 4, wobei das zweite Organ (44) ein Längsprofil umfasst, das sich entlang der Kante, an der es befestigt ist, erstreckt und auf dieser Kante eine radiale Überhöhung erzeugt.

6. Schubumkehrer (30) nach Anspruch 5, wobei das Profil einen Längsrand (46) umfasst, der eine seitliche Verlängerung der Kante bildet, an der das zweite Organ (44) befestigt ist.

7. Schubumkehrer (30) nach Anspruch 1, wobei die ersten Abdichtungselemente Folgendes umfassen:
- ein steifes erstes längliches Organ (48), das sich entlang der seitlichen Kante (10c) der Klappe (10) erstreckt, und gegebenenfalls ein steifes zweites längliches Organ (44), das sich entlang der seitlichen Kante (20c) der Verkleidung (20) erstreckt und das in der ersten Position durch ein vorbestimmtes Spiel (R1, R2) von dem ersten Organ (48) getrennt ist,
- oder umgekehrt ein steifes erstes längliches Organ, das sich entlang der seitlichen Kante der Verkleidung erstreckt, und gegebenenfalls ein steifes zweites längliches Organ, das sich entlang der seitlichen Kante der Klappe erstreckt und das in der ersten Position durch ein vorbestimmtes Spiel von dem ersten Organ getrennt ist.

8. Schubumkehrer (30) nach Anspruch 7, wobei das Spiel ein radiales Spiel (R1) oder in Bezug auf die Achse (A) ein umlaufendes Spiel (R2) ist.

9. Schubumkehrer (30) nach einem der vorstehenden Ansprüche, wobei jede der Klappen (10) Folgendes umfasst:
- ein zweites Dichtungselement (38, 40), das sich an der Außenseite (32b) der Wand (32) und/oder am stromaufwärtigen Ende (9ba) des stromabwärtigen Abschnitts (9b) der Abdeckung (9) befindet, wobei dieses zweite Dichtungselement sich derart entlang der stromabwärtigen Kante (10b) der Klappe erstreckt, dass in der ersten Position eine Abdichtung gewährleistet wird oder die Leckagen entlang dieser Kante verringert werden.

10. Schubumkehrer (30) nach Anspruch 9, wobei das zweite Dichtungselement an der Außenfläche und/oder am stromaufwärtigen Ende des stromabwärtigen Abschnitts der Abdeckung angebracht und befestigt ist.

11. Schubumkehrer (30) nach Anspruch 9, wobei das zweite Dichtungselement in die Wand der Klappe und/oder am stromaufwärtigen Ende des stromabwärtigen Abschnitts der Abdeckung integriert ist.

12. Schubumkehrer (30) nach einem der vorstehenden Ansprüche, wobei jede der Klappen ohne Dichtungselement entlang ihrer stromaufwärtigen Kante ist.

13. Schubumkehrer (30) nach einem der vorstehenden Ansprüche, wobei die ersten Dichtungselemente an der Außenseite der Wand jeder Klappe und/oder an der Außenseite der Verkleidungen angebracht und befestigt sind.

14. Schubumkehrer (30) nach einem der Ansprüche1 bis 12, wobei die ersten Dichtungselemente in die Wand der Klappe und/oder in die Verkleidung integriert sind.

15. Antriebsanordnung für ein Flugzeug, umfassend ein Zweikreis-Turbotriebwerk und einen Schubumkehrer (30) nach einem der vorstehenden Ansprüche.

## Claims

1. A thrust reverser (30) for a nacelle of an aircraft turbofan engine, this thrust reverser having a generally annular shape about an axis (A) and comprising:
- a stationary upstream annular structure (15, 19) which extends around an annular duct (6) for a secondary flow (F11),
- deflection grids (13) distributed around the axis,
- at least one annular cover (9) movable in axial translation relative to the stationary structure, from an upstream position in which the grids (13) are covered, to a downstream thrust-reversal position in which the grids are uncovered, this cover (9) comprising an upstream annular segment (9a) and a downstream annular segment (9b),
- fairings (20) carried by the cover (9), these fairings being distributed around the axis (A), each of these fairings extending inside and at a distance from the upstream segment (9a) of the cover (9) and comprising a downstream base (20a) connected to an upstream end (9ba) of the downstream annular segment (9b) of the cover (9), an upstream tip (20b), and two lateral edges (20c) connecting the tip to the base,
- deflection flaps (10) for deflecting the secondary flow (F11) through the grids (13), the flaps being distributed around the axis (A) and mounted between the fairings (20), the flaps being movable from a first position in which they extend inside and at a distance from the upstream segment (9a) of the cover (9) and in the extension of the adjacent fairings (20), when the cover (9) is in the upstream position, and a second position in which they extend into the duct (6) to deflect the secondary flow (F11), when the cover (9) is in its downstream position, each of these flaps (10) comprising:
• an upstream edge (10a) designed to be flush with said upstream structure in the first position,
• a downstream edge (10b) intended to be flush with the upstream end (9ba) of the downstream segment (9b) of the cover (9) in the first position, and
• lateral edges (10c) each comprising two portions, respectively upstream (10c1) and downstream (10c2), the upstream portions (10c1) of the lateral edges (10c) of the flaps (10) being intended to be flush with the upstream portions (10c1) of the lateral edges of adjacent flaps in the first position, and the downstream portions (10c2) of the lateral edges (10c) of the flaps (10) being intended on the one hand to be flush with the lateral edges (20c) of the fairings (20) in the first position, and on the other hand the downstream portions (10c2) of the lateral edges (10c) of the flaps (10) in the second position,
- and a moving device (21) for moving the cover (9) and the flaps (10),
wherein each of the flaps (10) comprises a rigid wall (32) extending as far as the upstream (10a), downstream (10b) and lateral (10c) edges, and defining these edges, this wall (32) comprising an aerodynamic internal face (32a) and an external face (32b) facing the upstream segment (9a) of the cover (9) in the first position,
and in that the reverser (30) further comprises:
- first sealing elements (34, 36) located on the external face (32b) of the wall (32) of each flap (10) and/or on an external face (20d) of the fairings (20), these first sealing elements extending along the lateral edges (10c, 20c) of the flap (10) and/or of the fairings (20) so as to provide a sealing along these edges in the first position.

2. The thrust reverser (30) according to claim 1, wherein the first sealing elements (34, 36) comprise:
- a first elastically deformable longitudinal member (42) which extends along the lateral edge (10c) of the flap (10), and a second rigid longitudinal member (44) which extends along the lateral edge (20c) of the fairing (20) and which cooperates by sealed support with said first member (42), in said first position,
- or conversely, a first elastically deformable longitudinal member which extends along the lateral edge of the fairing, and a second rigid longitudinal member which extends along the lateral edge of the flap and which cooperates by sealed support with said first member, in said first position.

3. The thrust reverser (30) according to claim 2, wherein said sealed support is a radially oriented support or a circumferentially oriented support with respect to said axis.

4. The thrust reverser (30) according to claim 2 or 3, wherein the second member (44) is L-shaped or parallelepipedal in cross-section.

5. The thrust reverser (30) according to one of claims 2 to 4, wherein the second member (44) comprises a longitudinal profile extending along the edge to which it is attached and generating a radial excessive thickness on this edge.

6. The thrust reverser (30) according to claim 5, wherein the profile comprises a longitudinal rim (46) forming a lateral extension of the edge to which the second member (44) is attached.

7. The thrust reverser (30) according to claim 1, wherein the first sealing elements comprise:
- a first rigid longitudinal member (48) which extends along the lateral edge (10c) of the flap (10), and optionally a second rigid longitudinal member (44) which extends along the lateral edge (20c) of the fairing (20) and which is separated by a predetermined clearance (R1, R2) from said first member (48), in said first position,
- or conversely, a first rigid longitudinal member which extends along the lateral edge of the fairing, and optionally a second rigid longitudinal member which extends along the lateral edge of the flap and which is separated by a predetermined clearance from said first member, in said first position.

8. The thrust reverser (30) according to claim 7, wherein said clearance is a radial clearance (R1) or a circumferential clearance (R2) with respect to said axis (A).

9. The thrust reverser (30) according to one of the preceding claims, wherein each of the flaps (10) comprises:
- a second sealing element (38, 40) located on the external face (32b) of the wall (32) and/or on the upstream end (9ba) of the downstream segment (9b) of the cover (9), this second sealing element extending along the downstream edge (10b) of the flap so as to seal or reduce the leakages along this edge in the first position.

10. The thrust reverser (30) according to claim 9, wherein the second sealing element is fitted and attached to the external face and/or to the upstream end of the downstream segment of the cover.

11. The thrust reverser (30) according to claim 9, wherein the second sealing element is integrated into the wall of the flap and/or on the upstream end of the downstream segment of the cover.

12. The thrust reverser (30) according to one of the preceding claims, wherein each of the flaps has no sealing element along its upstream edge.

13. The thrust reverser (30) according to one of the preceding claims, wherein the first sealing elements are fitted and attached to the external face of the wall of each flap and/or to the external face of the fairings.

14. The thrust reverser (30) according to one of claims 1 to 12, wherein the first sealing elements are integrated into the wall of the flap and/or into the fairing.

15. A propulsion unit for an aircraft, comprising a turbofan engine and a thrust reverser (30) according to one of the preceding claims.
